# EUROPÄISCHE PATENTSCHRIFT

(11) **EP 0 424 572 B1**
(45) Veröffentlichungstag und Bekanntmachung des Hinweises auf die Patenterteilung: **26.01.1994**
(21) Anmeldenummer: 89120018.0
(22) Anmeldetag: 27.10.1989
(51) Int. Cl.: C08K 3/00, C08L 27/06, C09C 1/06, C09C 1/36

(54) **Witterungsstabiler Hart-PVC-Formkörper, dessen Herstellung, und die Verwendung einer Ti02-haltigen Pigmentkombination zur Pigmentierung von Hart-PVC-Formkörpern**
Weatherproof rigid PVC moulded article, its preparation, and use of a pigment containing Ti02 for the pigmentation of rigid PVC moulded articles
Objet moulé de PVC rigide stable aux intempéries, sa préparation, et utilisation d'un pigment composé contenant Ti02 pour la pigmentation d'objets moulés de PVC rigide

(43) Veröffentlichungstag der Anmeldung: 02.05.1991
(73) Patentinhaber: Bärlocher GmbH, D-80992 München (DE)
(72) Erfinder: Rosenthal, Michael, Dr., D-8000 München 40 (DE); Pürzer, Albert W., Dr., D-8000 München 21 (DE); Hacker, Peter, D-8000 München 80 (DE)
(74) Vertreter: Grünecker, Kinkeldey, Stockmair & Schwanhäusser Anwaltssozietät

(56) Entgegenhaltungen:
- DE-C- 570 875

## Beschreibung

Die Erfindung betrifft einen witterungsstabilen, von Blei- und Cadmium-Stabilisatoren freien, das Pigment Titandioxid (TiO₂) enthaltenden Hart-PVC-Formkörper, ein Verfahren zu dessen Herstellung und die Verwendung einer TiO₂-haltigen Pigmentkombination zur Pigmentierung von an Blei- und Cadmiumstabilisatoren freien Hart-PVC-Formkörpern.

Weiße Hart-PVC-Formkörper für den Außenbereich, wie PVC-Fensterprofile, müssen strengen Anforderungen bezüglich der Witterungsbeständigkeit und Lichtstabilität genügen. Um diesen Anforderungen gerecht zu werden, enthalten Hart-PVC-Formkörper für den Außenbereich bisher als Weißpigment üblicherweise Titandioxid (TiO₂)in Kombination mit Blei- und/oder Cadmium-Stabilisatoren.

Sowohl die Titanerzaufschlußverfahren zur Gewinnung von Titandioxid als auch die Herstellung und Verwendung von Blei- und Cadmiumstabilisatoren sind mit mannigfaltigen Umweltschutzproblemen belastet. Dies hat insbesondere zu einer Verteuerung und Verknappung von Titandioxid geführt.

Bislang ist es nicht gelungen, zur Erzielung witterungsbeständiger und lichtstabiler Hart-PVC-Formkörper für den Außenbereich Titandioxid ganz oder wenigstens teilweise durch andere Weißpigmente zu ersetzen.

TiO₂ und ZnS enthaltende Pigmentmischungen sind aus der DE-C-570 875 bekannt. Es findet sich dort jedoch Kein Hinweis auf die Verwendung dieser Pigmente in Kunststoffen.

Die Aufgabe der vorliegenden Erfindung besteht in der Bereitstellung eines witterungsstabilen, von Blei- und Cadmium-Stabilisatoren freien Hart-PVC-Formkörpers mit verringertem TiO₂-Gehalt sowie eines Verfahrens zu dessen Herstellung.

Diese Aufgabe wird erfindungsgemäß gelöst durch einen Hart-PVC-Formkörper der eingangs genannten Art, der dadurch gekennzeichnet ist, daß er weiterhin das Pigment Zinksulfid (ZnS) enthält, wobei pro 1 Gewichtsteil TiO₂ 0,25 bis 2 Gewichtsteile ZnS vorliegen.

Völlig überraschend hat sich gezeigt, daß sich bei mit TiO₂ pigmentierten Hart-PVC-Formkörpern für die Außenanwendung eine unerwartet gute Lichtstabilität und Witterungsbeständigkeit erzielen läßt, wenn die normalerweise erforderliche TiO₂-Menge teilweise durch ZnS ersetzt wird, wobei pro 1 Gew.-Teil TiO₂ 0,25 bis 2 Gew.-Teile ZnS eingesetzt werden können.

Vorzugsweise enthält der erfindungsgemäße Hart-PVC-Formkörper pro 1 Gewichtsteil TiO₂ 0,33 bis 1 Gewichtsteil ZnS.

Innerhalb dieses Bereiches sind bevorzugte Einzel-Gewichtsverhältnisse 0,33, 0,5 und 1,0 Gewichtsteile ZnS pro 1 Gewichtsteil TiO₂.

Zur Herstellung der erfindungsgemäßen Hart-PVC-Formkörper können die Pigmente TiO₂ und ZnS einer als Ausgangsmaterial dienenden PVC-Formmasse einzeln oder in Form einer Pigmentkombination trocken zugemischt und die Formmasse dann in an sich bekannter Weise zu Formkörpern geformt werden. Die Gesamtmenge an TiO₂ + ZnS kann hierbei je nach Anwendungszweck 2 bis 15 Gewichtsteile pro 100 Gewichtsteile der PVC-Formmasse betragen.

Ein weiterer Vorteil der erfindungsgemäßen Hart-PVC-Formkörper bzw. der erfindungsgemäßen Verwendung einer TiO₂-haltigen Pigmentkombination in Hart-PVC-Produkten besteht darin, daß auf den bislang üblichen bzw. erforderlichen Einsatz von schwermetallhaltigen Stabilisatoren, wie Blei- und Cadmiumverbindungen, verzichtet werden kann. Blei- und Cadmium-Stabilisatoren würden sich bei erfindungsgemäßen Hart-PVC-Produkten geradezu unerwünscht hinsichtlich einer Verfärbung der Hart-PVC-Produkte auswirken.

Anstelle der toxischen Blei- und Cadmium-Stabilisatoren können die erfindungsgemäßen Hart-PVC-Produkte übliche schwermetallfreie Stabilisatorverbindungen enthalten, beispielsweise Calcium- und Zinkverbindungen, wie Calcium- und Zinkstearat oder Organozinnverbindungen.

Vorzugsweise wird erfindungsgemäß eine Pigmentkombination verwendet, die pro 1 Gew.-Teil TiO₂ 0,33 bis 1 Gew.-Teile ZnS enthält. Innerhalb dieses Bereiches sind bevorzugt Einzelgewichtsverhältnisse 0,33, 0,5 und 1 Gew.-Teile ZnS pro 1 Gew.-Teil TiO₂. Als Titandioxid werden für die erfindungsgemäßen Zwecke vorzugsweise Rutil-Typen verwendet.

In den beiliegenden Zeichnungen zeigen
- Fig. 1: die graphische Darstellung der bei einem künstlichen Bewitterungstest erhaltenen Gelbwerte von erfindungsgemäßen Hart-PVC-Produkten und von Vergleichsprodukten; und
- Fig. 2: die graphische Darstellung von bei einem künstlichen Bewitterungstest erhaltenen Gesamtfarbdifferenzen dE nach CIE-LAB-Farbsystem.

Die nachfolgenden Beispiele erläutern die Erfindung.

### Beispiele 1 bis 3 und Vergleichsbeispiele 1 und 2

TiO₂ und ZnS wurden mit variierenden Gewichtsverhältnissen in einer PVC-Fensterprofilrezeptur der in nachstehender Tabelle gezeigten Zusammensetzung verwendet. Bei den in der Tabelle angegebenen Zahlenwerten handelt es sich um Gewichtsteile.

**Tabelle**

| Bestandteile | Serie 1 (Vgl.Bsp.1) | Serie 2 (Vgl.Bsp.2) | Serie 3 (Bsp. 1) | Serie 4 (Bsp.2) | Serie 5 (Bsp.3) |
|---|---|---|---|---|---|
| PVC¹⁾ | 92 | 92 | 92 | 92 | 92 |
| Schlagzähmacher | 8 | 8 | 8 | 8 | 8 |
| CaCO₃ | 10 | 10 | 10 | 10 | 10 |
| Fließhilfe | 1 | 1 | 1 | 1 | 1 |
| Ca/Zn-Stabilisator-Gleitmittel-Compound | 4 | 4 | 4 | 4 | 4 |
| TiO₂ | 4 | 3 | 3 | 2 | 2 |
| ZnS | - | - | 1 | 2 | 1 |

| | | | | | |
|---|---|---|---|---|---|
| ¹⁾ Durch Suspensionspolymerisation hergestelltes, pulverförmiges Vinylchlorid-Homopolymer; K-Wert 68 | | | | | |

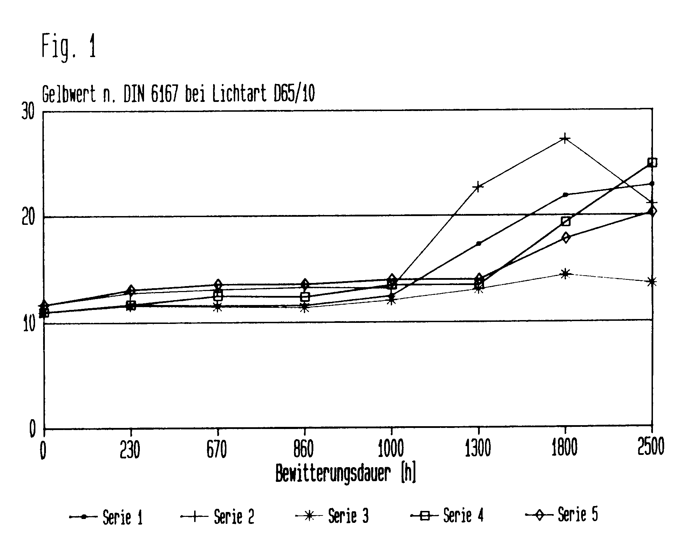

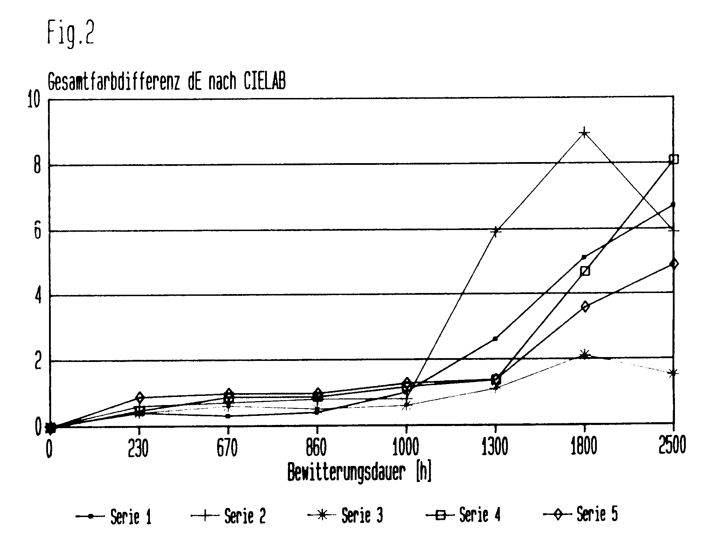

Aus den obigen Rezepturen wurden auf einem Laborwalzwerk Felle gefertigt. Die Walzentemperatur betrug 180°C, die Walzdauer 5 Min. Die Walzfelle wurden in noch heißem Zustand doppelt gefaltet und in eine auf 200°C vorgewärmte Presse gegeben. Die Gesamtpreßdauer betrug 60 sec. Die so gefertigten Preßplatten wurden einem künstlichen Bewitterungstest unter folgenden Bedingungen unterzogen:
Testbedingungen:
UV-CON entsprechend ASTM G 53
4 Stunden Belichtung/ 4 Stunden Betauung
Lampenart: UV-A, 313-400 nm
Schwarztafeltemperatur: 45°C
Die Witterungsstabilität wurde durch Farbmessung an den Prüflingen bewertet. Die hierbei erhaltenen Ergebnisse sind in den Figuren 1 und 2 graphisch dargestellt.

Fig. 1 zeigt die Bewertung des Gelbwertes nach DIN 6167 bei Normlichtart D 65/10 in Abhängigkeit der Bewitterungsdauer. Wie aus der Fig. 1 zu entnehmen ist, wird beim erfindungsgemäßen Beispiel 1, das sich von der Rezeptur des Vergleichsbeispiels 1 lediglich dadurch unterscheidet, daß 25 Gew.-% des TiO₂ durch ZnS ersetzt sind, nach einer Bewitterungsdauer von 2500 Stunden ein gegenüber Vergleichsbeispiel 1 deutlich geringerer Gelbwert erzielt. Beim Beispiel 2, das sich von der Rezeptur des Vergleichsbeispiels 1 dadurch unterscheidet, daß 50 % des TiO₂ durch ZnS ersetzt sind, wird nach einer Bewitterungsdauer von 2500 Stunden ein mit Vergleichsbeispiel 1 vergleichbarer Gelbwert erzielt.

Beim Beispiel 3, das sich von der Rezeptur des Vergleichsbeispiels 2 lediglich darin unterscheidet, daß 1/3 des TiO₂ durch ZnS ersetzt sind, wird gegenüber Vergleichsbeispiel 2 ein deutlich langsamerer Anstieg des Gelbwertes beobachtet, wobei die Gelbwerte nach einer Bewitterungsdauer von 2500 Stunden auf vergleichbarem Niveau liegen.

Fig. 2 zeigt dei Bewertung der Gesamtfarbdiffererenz dE nach CIELAB in Abhängigkeit der Bewitterungsdauer. Beim Beispiel 1, bei dem im Vergleich zu Vergleichsbeispiel 1 25 % des TiO₂ durch ZnS ersetzt sind, wird hierbei ein wesentlich geringerer Helligkeitsverlust während der gesamten Bewitterungsdauer beobachtet. Beim Beispiel 2, bei dem im Vergleich zu Vergleichbeispiel 2 50 % des TiO₂ durch ZnS ersetzt sind, wird gegenüber Vergleichsbeispiel 2 ein etwas langsamerer Anstieg des Helligkeitsverlustes verzeichnet, wobei die Helligkeitswerte nach einer Gesamtbewitterungsdauer von 2500 Stunden auf etwa vergleichbarem Niveau liegen.

Bei Beispiel 3, das sich gegenüber dem Vergleichsbeispiel 2 darin unterscheidet, daß 1/3 des TiO₂ durch ZnS ersetzt sind, wird ein deutlich langsameres Ansteigen des Helligkeitsverlustes beobachtet, wobei der Helligkeitsverlust nach einer Gesamtbewitterungsdauer von 2500 Stunden beim erfindungsgemäßen Beispiel 3 etwas geringer ist.

Die obigen Ergebnisse zeigen, daß die erfindungsgemäßen Hart-PVC-Formkörper, bei denen der TiO₂-Gehalt verringert und teilweise durch ZnS ersetzt ist, eine im Vergleich zu Hart-PVC- Formkörpern, die als Weißpigment ausschließlich TiO₂ enthalten, mindestens äquivalente und in vielen Fällen bessere Witterungsbeständigkeit und Lichtstabilität erzielt wird. Durch den verringerten TiO₂-Gehalt lassen sich somit gemäß der Erfindung unter Aufrechterhaltung bzw. sogar Verbesserung der Qualität deutliche Kosteneinsparungen bei den Weißpigmenten erreichen.

## Patentansprüche

1. Witterungsstabiler, von Blei und Cadmium-Stabilisatoren freier, das Pigment Titandioxid (TiO₂) enthaltender Hart-PVC-Formkörper, **dadurch gekennzeichnet,** daß er weiterhin das Pigment Zinksulfid (ZnS) enthält, wobei pro 1 Gewichtsteil TiO₂ 0,25 bis 2 Gewichtsteile ZnS vorliegen.

2. Hart-PVC-Formkörper nach Anspruch 1, **dadurch gekennzeichnet,** daß pro 1 Gewichtsteil TiO₂ 0,33 bis 1 Gewichtsteile ZnS vorliegen.

3. Hart-PVC-Formkörper nach Anspruch 1 oder 2, **dadurch gekennzeichnet,** daß pro 1 Gewichtsteil TiO₂ 0,33 Gewichtsteile ZnS vorliegen.

4. Hart-PVC-Formkörper nach Anspruch 1 oder 2,
**dadurch gekennzeichnet,** daß pro 1 Gewichtsteil TiO₂ 0,5 Gewichtsteile ZnS vorliegen.

5. Hart-PVC-Formkörper nach Anspruch 1 oder 2,
**dadurch gekennzeichnet,** daß pro 1 Gewichtsteil TiO₂ 1 Gewichtsteil Zns vorliegt.

6. Hart-PVC-Formkörper nach einem der Ansprüche 1 bis 5, **dadurch gekennzeichnet,** daß das TiO₂ dem Rutil-Typ angehört.

7. Verfahren zur Herstellung eines Hart-PVC-Formkörpers gemäß einem der Ansprüche 1 bis 6, **dadurch gekennzeichnet,** daß man einer zur Herstellung des Hart-PVC-Formkörpers dienenden PVC-Formmasse die Pigmente TiO₂ und ZnS in den jeweiligen Gewichtsverhältnissen zugibt und diese PVC-Formmasse in an sich bekannter Weise zu einem Hart-PVC-Formkörper formt.

8. Verfahren nach Anspruch 7, **dadurch gekennzeichnet,**
daß man die Pigmente TiO₂ und ZnS in einer Gesamtmenge von 2 bis 15 Gewichtsteilen pro 100 Gewichtsteile der PVC-Formmasse zugibt.

9. Verwendung einer TiO₂-haltigen Pigmentkombination, die pro 1 Gewichtsteil TiO₂ 0,25 bis 2 Gewichtsteile ZnS enthält, zur Pigmentierung von an Blei- und Cadmium-Stabilisatoren freien Hart-PVC-Formkörpern.

10. Verwendung nach Anspruch 9, wobei die Pigmentkombination pro 1 Gewichtsteil TiO₂ 0,33 bis 1 Gewichtsteile ZnS enthält.

11. Verwendung nach Anspruch 9 oder 10, wobei die Pigmentkombination pro 1 Gewichtsteil TiO₂ 0,33 Gewichtsteile ZnS enthält.

12. Verwendung nach Anspruch 9 oder 10, wobei die Pigmentkombination pro 1 Gewichtsteil TiO₂ 0,5 Gewichtsteile ZnS enthält.

13. Verwendung nach Anspruch 9 oder 10, wobei
die Pigmentkombination pro 1 Gewichtsteil TiO₂ 1 Teil ZnS enthält.

14. Verwendung nach einem der Ansprüche 9 bis 13, wobei die Pigmentkombination in einer Menge von 2 bis 15 Gewichtsteilen pro 100 Gewichtsteile PVC eingesetzt wird.

## Claims

1. Weathering-resistant, rigid PVC moulding which is free from lead and cadmium stabilisers and contains the pigment titanium dioxide (TiO₂), characterised in that it also contains the pigment zinc sulphide (ZnS), with up to 2 parts by weight of ZnS being present per part by weight of TiO₂.

2. Rigid PVC moulding according to Claim 1, characterised in that from 0.33 to 1 part by weight of ZnS are present per part by weight of TiO₂.

3. Rigid PVC moulding according to Claim 1 or 2, characterised in that 0.33 part by weight of ZnS is present per part by weight of TiO₂.

4. Rigid PVC moulding according to Claim 1 or 2, characterised in that 0.5 part by weight of ZnS is present per part by weight of TiO₂.

5. Rigid PVC moulding according to Claim 1 or 2, characterised in that 1 part by weight of ZnS is present per part by weight of TiO₂.

6. Rigid PVC moulding according to one of Claims 1 to 5, characterised in that the TiO₂ is of the rutile type.

7. Process for the production of a rigid PVC moulding according to one of Claims 1 to 6, characterised in that the pigments TiO₂ and ZnS in the respective weight ratios are added to a PVC moulding composition serving for the production of the rigid PVC moulding, and this PVC moulding composition is moulded in a manner known per se to give a rigid PVC moulding.

8. Process according to Claim 7, characterised in that the pigments TiO₂ and ZnS are added in a total amount of from 2 to 15 parts by weight per 100 parts by weight of the PVC moulding composition.

9. Use of a TiO₂-containing pigment combination which contains from 0.25 to 2 parts by weight of ZnS per part by weight of TiO₂ for pigmenting, rigid PVC mouldings containing no lead and cadmium stabilisers.

10. Use according to Claim 9, where the pigment combination contains from 0.33 to 1 part by weight of ZnS per part by weight of TiO₂.

11. Use according to Claim 9 or 10, where the pigment combination contains 0.33 part by weight of ZnS per part by weight of TiO₂.

12. Use according to Claim 9 or 10, where the pigment combination contains 0.5 part by weight of ZnS per part by weight of TiO₂.

13. Use according to Claim 9 or 10, where the pigment combination contains 1 part of ZnS per part by weight of TiO₂.

14. Use according to any of Claims 9 to 13, where the pigment combination is employed in an amount of from 2 to 15 parts by weight per 100 parts by weight of PVC.

## Revendications

1. Objet moulé de PVC rigide exempt de stabilisateurs au plomb et au cadmium, stable aux intempéries, contenant le pigment dioxyde de titane (TiO₂), caractérisé en ce qu'il contient, par ailleurs, le pigment sulfure de zinc (ZnS), pour 1 part en poids de TiO₂ étant présentes de 0,25 à 2 parts en poids de ZnS.

2. Objet moulé de PVC rigide suivant la revendication 1, caractérisé en ce que pour 1 part en poids de TiO₂ est présente de 0,33 à 1 part en poids de ZnS.

3. Objet moulé de PVC rigide suivant la revendication 1 ou 2, caractérisé en ce que pour 1 part en poids de TiO₂ est présente 0,33 part en poids de ZnS.

4. Objet moulé de PVC rigide suivant la revendication 1 ou 2, caractérisé en ce que pour 1 part en poids de TiO₂ est présente 0,5 part en poids de ZnS.

5. Objet moulé de PVC rigide suivant la revendication 1 ou 2, caractérisé en ce que pour 1 part en poids de TiO₂ est présente 1 part en poids de ZnS.

6. Objet moulé de PVC rigide suivant l'une des revendications 1 à 5, caractérisé en ce que le TiO₂ appartient au type rutile.

7. Procédé pour la préparation d'un objet moulé en PVC rigide suivant l'une des revendications 1 à 6, caractérisé en ce qu'on ajoute les pigments TiO₂ et ZnS à une masse de moulage de PVC servant pour la préparation de l'objet moulé en PVC rigide suivant les rapports de poids respectifs et que l'on transforme cette masse de moulage de PVC, de manière connue en soi, en un objet moulé de PVC.

8. Procédé suivant la revendication 7, caractérisé en ce qu'on ajoute les pigments TiO₂ et ZnS à la masse de moulage de PVC en une quantité totale de 2 à 15 parts en poids pour 100 parts en poids de masse de moulage de PVC.

9. Utilisation d'un pigment combiné contenant TiO₂, qui, pour 1 part en poids de TiO₂, contient de 0,25 à 2 parts en poids de ZnS, pour la pigmentation d'objets moulés de PVC rigide exempts de stabilisateurs au plomb et au cadmium.

10. Utilisation suivant la revendication 9, le pigment combiné contenant de 0,33 à 1 part en poids de ZnS pour 1 part en poids de TiO₂.

11. Utilisation suivant la revendication 9 ou 10, le pigment combiné contenant 0,33 part en poids de ZnS pour 1 part en poids de TiO₂.

12. Utilisation suivant la revendication 9 ou 10, le pigment combiné contenant 0,5 part en poids de ZnS pour 1 part en poids de TiO₂.

13. Utilisation suivant la revendication 9 ou 10, le pigment combiné contenant 1 part en poids de ZnS pour 1 part en poids de TiO₂.

14. Utilisation suivant l'une des revendications 9 à 13, le pigment combiné étant utilisé en une quantité de 2 à 15 parts en poids pour 100 parts en poids de PVC.
